# EUROPEAN PATENT APPLICATION

(11) **EP 4 664 823 A1**
(43) Date of publication of application: **17.12.2025**
(21) Application number: 24181057.1
(22) Date of filing: 10.06.2024
(51) Int. Cl.: H04L 9/40, H04L 12/18

(54) **A METHOD FOR TRANSPORTING MULTICAST PACKETS SECURELY**

(71) Applicant: Insta Advance Oy, 33900 Tampere (FI)
(72) Inventor: Joutsenvirta, Mika, 33480 Ylöjärvi (FI); Ruohonen, Joonas, 33870 Tampere (FI)
(74) Representative: Kolster Oy Ab

(57) **Abstract**

A method for transporting packets in an Internet Protocol communication network, the method comprising determining an address of a second encryptor, wherein the second encryptor is routed to a server providing multicast data; sending an multicast group join message to the second encryptor using a multicast routing protocol; sending an encrypted multicast group join message to the second encryptor server to obtain multicast data from the server; encrypting the multicast data by the second encryptor; receiving encrypted multicast data from the second encryptor; decrypting the multicast data by the first encryptor; and receiving the multicast data at the host.

## Description

### FIELD OF THE INVENTION

The invention relates to a method and an arrangement for joining to a multicast group in an IP network and transporting multicast packets in a secure manner.

### BACKGROUND OF THE INVENTION

Multicast routing in IP networking is used, when data transmission is addressed to a group of destination computers simultaneously, unlike in unicast routing, where the routing is done one-to-one way. A multicast transportation use routers in the network to forward the packets to a client subnet where multiple client devices are listening/wishing to receive the multicast data. The key feature of multicast routing is that server providing the multicast transmission sends only a single stream, allowing multiple clients to listen in. For the multicast transmission to work, the network in between, that is the routers between the providing server and the destination computers, have to be multicast capable and the routers need to learn and store the directions of the subscriber hosts and destination computers, who have joined the multicast transmission. The routing information for the multicast transmission is thus visible publicly in the IP network.

### BRIEF DESCRIPTION OF THE INVENTION

An objective of the present invention to provide a method and an arrangement for implementing the method to solve the above problems. The objects of the invention are achieved by a method and an arrangement which are characterized by what is stated in the independent claims. The preferred embodiments of the invention are disclosed in the dependent claims.

The method and the arrangement use two separate messages, which are defined so that they together enable a host computer to join the multicast group without exposing any red side address to the black side of the network. Firstly, the address of an encryptor, which is routed to a multicast server in a red network is determined. The host computer sends a plaintext multicast group join message with the address of the multicast server, which message is forwarded towards an encryptor, which is router to the multicast server. A second message is sent in an encrypted format comprising instructions to the encryptor to obtain the multicast data from the multicast server.

### BRIEF DESCRIPTION OF THE DRAWINGS

In the following the invention will be described in greater detail by means of preferred embodiments with reference to the attached drawings, in which:

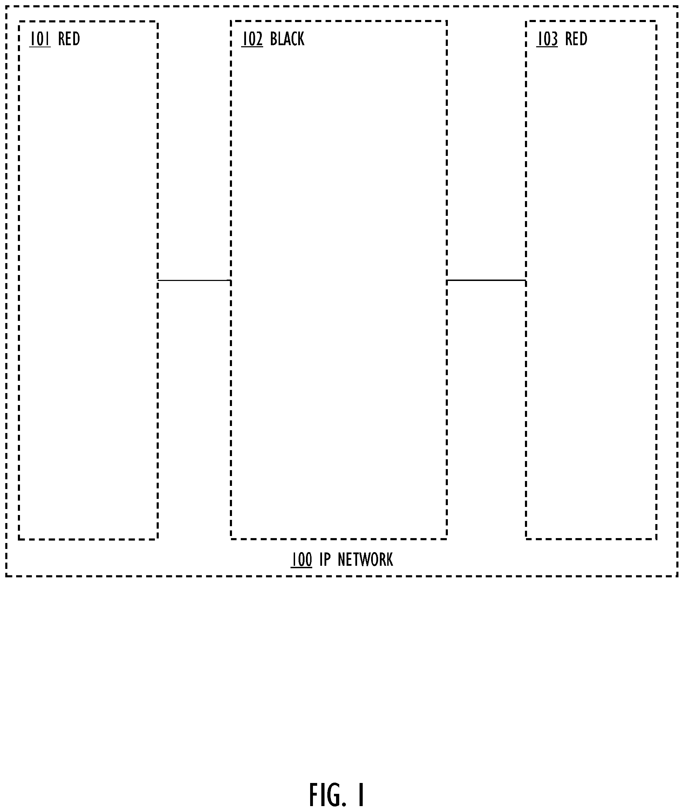

Figure 1 illustrates schematically an IP network arrangement of black and red sides;
Figure 2 illustrates schematically an embodiment of the arrangement of the invention;
Figure 3 illustrates schematically a message sequence diagram of the methods;
Figure 4 illustrates schematically the different steps of the method;
Figure 5 illustrates schematically an embodiment of the arrangement of the invention;
Figure 6 illustrates schematically a computer comprising an embodiment of the arrangement of the invention.

### DETAILED DESCRIPTION OF THE INVENTION

Multicast routing is one of the routing protocols in IP networking. In multicast routing, data transmission is addressed to a group of destination computers simultaneously, unlike in unicast routing, where the routing is done one-to-one way. In multicast routing, the data is transmitted simultaneously to all subscribers registered in a group. There are several multicast routing protocols supporting communications such as Multicast Source Discovery Protocol, Multicast BGP, Protocol Independent Multicast (PIM). To implement the multicast transmission, registration to a subscriber grouping and control traffic for the transmission are required. The multicast transmission uses User Datagram Protocol (UDP) as the transport layer protocol. The multicast transport relies on multicast-enabled routers in the network to forward the packets to a client subnet where multiple client devices are listening. The multicast server sends a single stream, allowing multiple clients to listen in. An example of multicast routing protocol is PIM, which is a family of multicast routing protocols. PIM does not include its own topology discovery mechanism, but instead uses routing information supplied by other routing protocols. PIM is not dependent on a specific unicast routing protocol; it can make use of any unicast routing protocol in use on the network. PIM does not build its own routing tables, instead PIM uses unicast routing tables for reverse-path forwarding to ensure loop-free forwarding of multicast packets in multicast routing. The routing information for the multicast transmission is thus visible.

When a multicast packet enters a router's interface, the router looks up the list of networks that are reachable via that interface (i.e., it checks the paths by which the packet could have arrived). If the router finds a matching routing entry for the source IP address of the multicast packet, the RPF check passes and the packet is forwarded to all other interfaces that are participating in that multicast group. If the RPF check fails, the packet is dropped. As a result, the forwarding of the packet is decided based upon the reverse path of the packet rather than the forward path. By only forwarding packets that come into the interface that also holds the routing entry for the source of the packet, loops are prevented.

A Rendezvous Point (RP) acts as the meeting place for sources and receivers of multicast data. In a PIM-SM network, sources must send their traffic to the RP. This traffic is then forwarded to receivers down a shared distribution tree. In the RP model, other routers do not need to know the addresses of the sources for every multicast group. All they need to know is the IP address of the RP router. The RP router discovers the sources for all multicast groups. PIM Sparse Mode (PIM-SM) explicitly builds unidirectional shared trees rooted at a rendezvous point (RP) per group, and optionally creates shortest-path trees per source.

PIM Source-Specific Multicast (PIM-SSM) builds trees that are rooted in just one source, offering a more secure and scalable model for a limited number of applications (mostly broadcasting of content). In SSM, an IP datagram is transmitted by a source S to an SSM destination address G, and receivers can receive this datagram by subscribing to channel (S,G).

When a host (e.g. a computer) wants to join a multicast group, it sends a join message, e.g. using the Internet Group Management Protocol (IGMP), to a multicast group address. The IGMP is a communications protocol used by hosts and adjacent routers on IP networks to establish multicast group memberships.

If a computer wishes to maintain information of its joining to multicast group confidential from the rest of the IP communication network, it is not possible with the state-of-the-art routing mechanisms. Also, and on the other hand, the client computer does not always wish to expose routing data to the server providing multicast data.

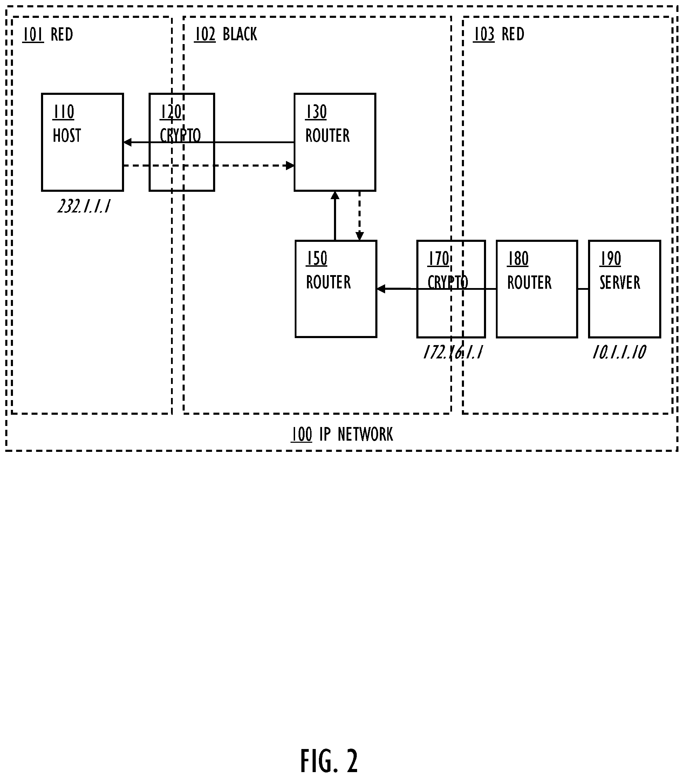

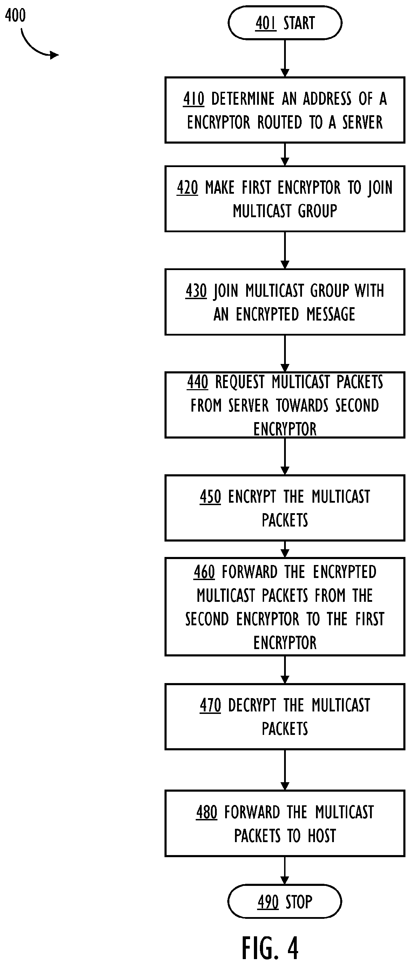

Referring to Figures 2 and 4, an IP communication network comprises a red-black architecture having a first red side 101, a black side 102, and a second red side 103. The first and second red sides 101, 103, respectively, have a high security level and the black side 102 has a low security level, wherein the high security level is more secure than the low security level. A host 110 on the first red side 101 wants to join a multicast group, that is provided by a first server 190 on the second red side 103. Plaintext information from the host 110 is transformed into ciphertext information by the first encryptor 120 before transporting to the black side 102. Also, plaintext information from the first server 190 is transformed into ciphertext information by the second encryptor 170 before transporting to the black side 102. A router 150 is in the black side 102 of the IP communication network. In a typical scenario, there are multiple routers in the IP network that take part in transporting the packets from the first server 190 to host 110.

In an embodiment of the invention there is a method for transporting multicast packets securely, the method comprising determining by a first encryptor 120 an address of a second encryptor 170, wherein the second encryptor 170 is routed on the second red side 103 to a first server 190 providing multicast data. The host 110 sends a normal multicast group query, like an IGMPv3 query, comprising the actual address from where the data is requested. The query arrives first at the first encryptor 120. The first encryptor 120 does not request data from a red address through the black side network 102, but instead it makes an investigation of its own routing tables and behind which router the address for the first server 190 is. From there it learns that the first server 190 is behind the second encryptor 170. The second encryptor 170 is encrypting IP traffic from the second red side 103 and transporting the traffic to the black side 102. The host 110 does not request multicast data directly from the first server 190, because it wants to refrain exposing addresses on both the first and second red sides 101, 103, respectively. Instead, the host 110 sends an encrypted multicast group JOIN message to the second encryptor 170, wherein the JOIN message comprises a request to obtain multicast data from the first server 190. The JOIN message is, for example a PIM JOIN, message. The second encryptor 170 forwards this request towards the first server 190. After receiving the request, the first server 190 begins forwarding multicast data towards the direction that requested it. When the multicast data ends up at the second encryptor 170, the second encryptor 170 encrypts the multicast data and sets its own address as the source address of packets delivering the multicast data. Thus, the black side 102 network does not see the origin address of the multicast packets. The black side 102 network has been configured to route the multicast data towards destination of the first encryptor 120. The first encryptor 120 decrypts the encrypted multicast data, which comprises the plaintext source address of the first server 190. The first encryptor 120 then forwards the plaintext multicast data to the host 110. Also, the destination address of the multicast packets remains unexposed to the black side 102 network.

The addresses of red network should not be visible to the black side 102. In the skill of the art, data is usually encrypted in the black side 102 or an address conversion is performed. In the case of PIM-SSM, the host 110 wishing to receive multicast traffic from the first server 190 at address 10.1.1.10. The host 110 sends a normal IGMPv3 query containing the actual address from where the data is requested. The encryptor 120 does not request data from a red address through the black network, but instead it makes an investigation of its own routing tables and behind which router that address 10.1.1.10 is. From there it learns that the device is behind the encryptor 170 at address 172.16.1.1. The encryption 120 then sends an IGMPv3 request to that encryptor 170. Based on this request, the black side 102 network learns that the left side - the red network 101 - secretly wants multicast data from address 172.16.1.1.

However, it is not enough for the first server 190 to start multicasting data address 10.1.1.10. In the embodiment of the invention, a separate request is put in to initiate the multicast. An encrypted (ESP encapsulated) PIM JOIN request is sent to the router 180 - here at address 172.16.1.1 - and the request defines that the host 110 wants data from the address 10.1.1.10. When the encryptor 120 gets this request, based on that, it can forward the request to the first server 190. When this request ends up in front of the first server 190, the router 180 knows how to start directing the data in the direction that requested it. When the data then ends up at the encryptor 170, the encryptor 170 encrypts the multicast message and configures the source address for the encrypted packet its own address 172.16.1.1. Because the black network 131 has been told that multicast data to destination 232.1.1.1 from source 172.16.1.1
the original multicast packet can be found where the source address is 10.1.1.10 and it is directed to the host that requested it.

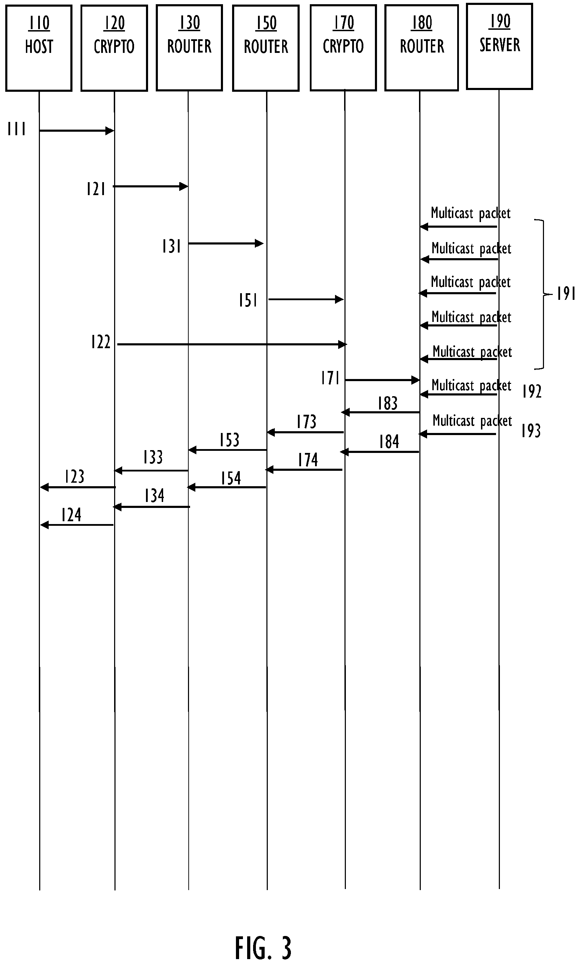

The sequence of the request messages and multicast packets is illustrated in Figure 3.
- Before the host 110 is joining the multicast group, in 191, the first server 190 is sending plaintext multicast packets towards the router 180. The multicast packets may or may not be forwarded to the direction of encryptor 170, depending a request to join the respective multicast group has been received from the encryptor 170.
- In 111, the host 110 sends the IGMP JOIN message (e.g. IGMPv3) containing the actual address from where the data is requested, to the encryptor 120.
- In 121, the encryptor 120 forwards the IGMP JOIN message containing the address of the encryptor 170 through which the data is requested, to the router 130.
- In 131, the router 130 sends the PIM JOIN message containing the address of the encryptor 170 through which the data is requested, to the router 150.
- In 151, the router 150 forwards the PIM JOIN message to the encryptor 170.

In a typical IP network environment, there are several routers on the route between the first encryptor 120 and the second encryptor 170.
- In 122, the encryptor 120 sends an encrypted PIM JOIN message comprising a request that the host 110 wants data from the first server 190.
- In 171, the encryptor 170 decrypts the encapsulated PIM JOIN message and sends the PIM JOIN message to the router 180. It may also be that the server 190 is directly connected to second encryptor 170.
- In 183, the router 180 forwards the multicast packets towards encryptor 170, i.e., the multicast packets send by the first server 190 starting from 192 onwards.
- In 173, the encryptor 170 encrypts the multicast packet and sends it towards the router 150. The encrypted multicast packet is addressed to the first encryptor 120.
- In 153, the router 150 forwards the encrypted multicast packet to the router 130.
- In 133, the router 150 forwards the encrypted multicast packet to the encryptor 120.
- In 123, the encryptor 120 decrypts the encrypted multicast packet and sends the plaintext multicast packets to the host 110.

Hence, the method comprises two key messages, which are defined so that they together enable the host 110 joining the multicast group without exposing any red side 101, 103 address to the black side 102 of the network. Firstly, the host 110 sends a plaintext multicast group join message with the address of the first server 190, which message is forwarded by the first encryptor 120 towards the second encryptor 170. From the perspective of the black side 102, this message is coming from the encryptor 120. This is illustrated by messages 111, 121, 131, and 151. The purpose of this join message is to request multicast packets from the requested multicast group. However, since the first server 190 is on the red side 103, the first message is addressed only to the second encryptor 170. The second message, 122, is an encrypted message addressed also to the second encryptor 170. The second message 122 contains the request to join the multicast group. Figure 4 is illustrating the different steps of the method. Tyeh steps are performed by the host, encryptor, router and the server describ3ed above and in Figure 2.

Figure 4 is illustrating the method 400 as a block diagram the steps of the method 400:
- determining 410 by a first encryptor 120 an address of a second encryptor 170, wherein the second encryptor 170 is routed to a first server 190 providing first multicast data, and the first encryptor 120 is routed to a host 110;
- sending 420 by the first encryptor 120 a multicast group join message to the second encryptor 170 using a multicast routing protocol;
- sending 430 an encrypted message to the second encryptor 170, wherein the encrypted message comprises instructions to the second encryptor 170 to obtain 440 the first multicast data from the first server 190;
- encrypting 450 the multicast data and the first server 190 routing data by the second encryptor 170;
- receiving 460 encrypted the first multicast data from the second encryptor;
- decrypting 470 the first multicast data by the first encryptor 120; and
- receiving 480 the first multicast data at the host 110.

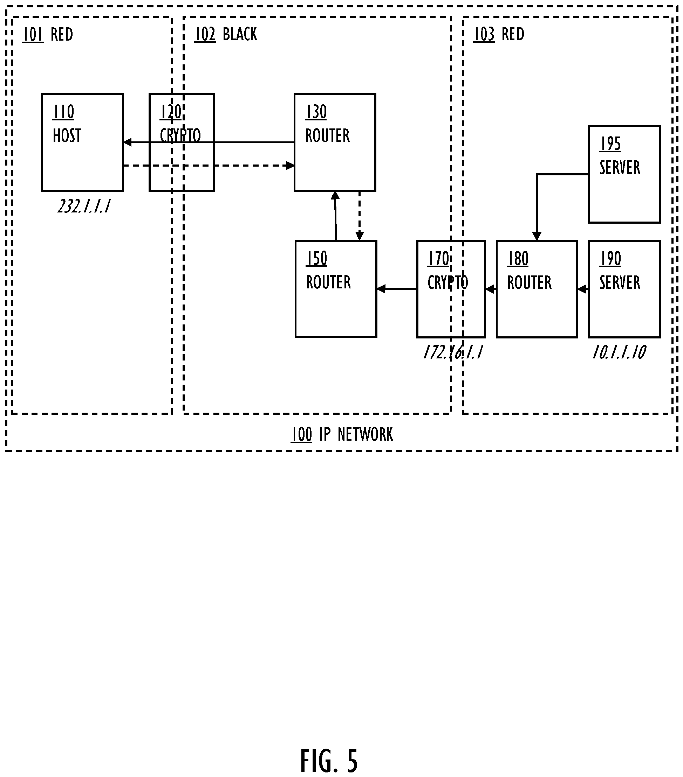

In another embodiment of the invention, and referring to Figure 5, the encrypted message further comprises instructions to obtain a second multicast data from a second server 195. The method further comprises encrypting the second multicast data and the second server 195 routing data by the second encryptor 170, receiving encrypted the second multicast data from the second encryptor 170, decrypting the second multicast data by the first encryptor 120, and receiving the second multicast data at the host 110. The multicast packets are thus obtained from the first and second servers 190, 195, and the multicast packets from the first and second servers 190, 195 are both encrypted by the encryptor 170 and decrypted by the encryptor 120. From the perspective of the black side 102 network, these multicast packets appear only as traffic from encryptor 170 towards encryptor 120. The number of sources, i.e., originating servers, remains unexposed to the black side 102 network.

In another embodiment of the invention, the method further comprising suspending the forwarding of the first multicast data by the second encryptor 170, determining by the first encryptor 120 an updated address of the second encryptor 170, sending by the second encryptor 170 a request to obtain the first multicast data from the first server 190, and resuming by the first encryptor 120 receiving encrypted the first multicast data. The first server 190 may be configured to be mobile, i.e., be installed in a moving facility, like a vehicle. Depending on the IP network configuration and the connection after resuming, the routing from encryptor 170 to encryptor 120 might be changed. Still, the transportation of multicast packets from the first server 190 to the host 110 may continue, and the addresses of both red sides 101, 103 remain unexposed to the black side 102 network.

In another embodiment of the invention there is an arrangement for transporting multicast packets in an Internet Protocol communication network securely, wherein the host 110 wants to receive multicast packets from the server 190 without exposing the addresses of the host 110 itself and of the server 190 to the black side 102 of the IP network. The arrangement comprises a first encryptor 120 configured to determine an address of a second encryptor 170, wherein the second encryptor 170 is routed to a first server 190 providing multicast data, and wherein the first encryptor 120 is routed to the host 110. The first encryptor 120 is configured to send a multicast group join message to the second encryptor 170 using a multicast routing protocol. The first encryptor 120 is further configured to send an encrypted multicast group join message to the second encryptor 170 comprising instructions to the second encryptor 170 to obtain multicast data from the first server 190. The second encryptor 170 is configured to encrypt the multicast packets and forward the encrypted multicast data towards the first encryptor 120. The first encryptor 120 is configured to receive encrypted multicast packets from the second encryptor 170, and to decrypt the multicast data.

In another embodiment of the invention there is a non-transitory, computer-readable medium storing instructions that, when executed by at least one processor of a computer, perform a method for transforming packets in an Internet Protocol communication network. The non-transitory, computer-readable medium comprises instructions to determine by a first encryptor 120 an address of a second encryptor 170, wherein the second encryptor 170 is routed to a first server 190 providing first multicast data, and the first encryptor 120 is routed to a host 110. The medium further comprises instructions to send by the first encryptor 120 two messages. The first message is a multicast group join message to the second encryptor 170 using a multicast routing protocol. The second message to be send after the first message is an encrypted message to the second encryptor 170, wherein the encrypted message comprises instructions to the second encryptor 170 to obtain the first multicast data from the first server 190. Furthermore, the medium comprises instructions for the second encryptor 170 to encrypt the multicast data and the first server 190 routing data, and for the first encryptor 120 to receive encrypted the first multicast data from the second encryptor 170. The first encryptor 120 is instructed to decrypt the first multicast data and to forward the first multicast data to the host 110.

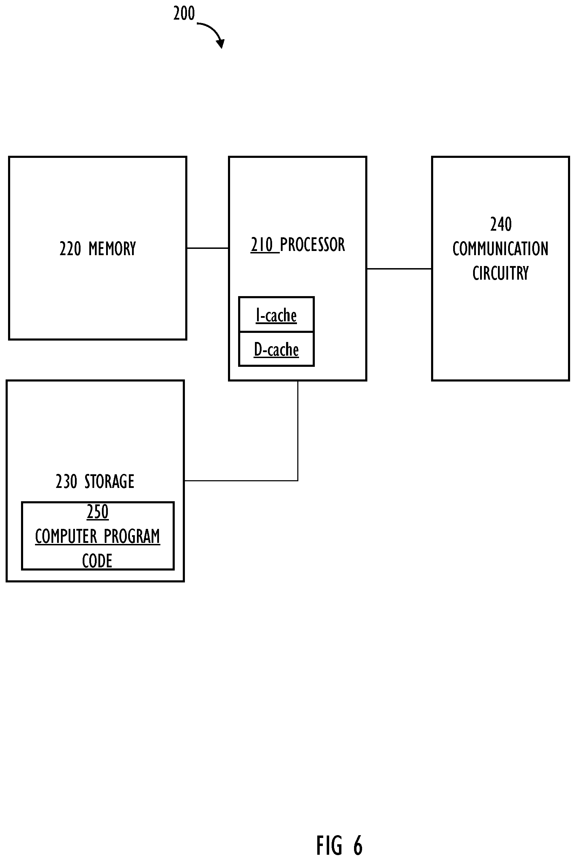

Figure 6 illustrates an embodiment of a computer 200 configured to carry out at least some of the above-described functions of transforming IP packets. The computer may comprise an electronic device comprising at least one processor 210 and at least one memory 220. The processor 210 may form or be a part of a processing circuitry. The computer may comprise a communication circuitry 240 and a storage 230 connected to the processor 210. The processor 210 may use the communication circuitry 240 to transmit and receive IP packets according to the supported communication protocol. The storage 230 may store instructions for IP packet transformation the processor executes upon reading the computer program.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, an applications processor integrated circuit or a similar integrated circuit in a server, a host computer, a router, an encryptor, or another network device.

In an embodiment, at least some of the processes described in connection with Figures 3-4 may be carried out by a computer comprising corresponding means for carrying out at least some of the described processes. Some example means for carrying out the processes may include at least one of the following: processor (including dual-core and multiple-core processors), digital signal processor, controller, receiver, transmitter, encryptor, decryptor, memory, RAM, ROM, soft-ware, firmware, display, user interface, display circuitry, user interface circuitry, user interface software, display software, circuit, and circuitry. In an embodiment, the at least one processor 210, the memory 220, and the computer program code 250 form processing means or comprises one or more computer program code portions for carrying out one or more operations according to any one of the embodiments of Figures 3-4 operations thereof.

The techniques and methods described herein may be implemented by various means. For example, these techniques may be implemented in hardware (one or more devices), firmware (one or more devices), software (one or more modules), or combinations thereof. For a hardware implementation, the computer(s) of embodiments may be implemented within one or more application-specific integrated circuits (ASICs), programmable logic devices (PLDs), field programmable gate arrays (FPGAs), processors, controllers, micro-controllers, microprocessors, other electronic units designed to perform the functions de-scribed herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise con-figurations set forth in the given figures, as will be appreciated by one skilled in the art.

Embodiments as described may also be carried out in the form of a computer process defined by a computer program or portions thereof. Embodiments of the methods described in connection with Figures 3-4 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, telecommunications signal, and software distribution package, for example. The computer program medium may be a non-transitory medium. Coding of software for carrying out the embodiments as shown and described is well within the scope of a person of ordinary skill in the art.

It will be obvious to a person skilled in the art that, as the technology advances, the inventive concept can be implemented in various ways. The invention and its embodiments are not limited to the examples described above but may vary within the scope of the claims.

## Claims

1. A method (400) for transporting packets in an Internet Protocol communication network, the method comprising:
determining (410) by a first encryptor (120) an address of a second encryptor (170), wherein the second encryptor (170) is routed to a first server (190) providing first multicast data, and the first encryptor (120) is routed to a host (110);
sending (420) by the first encryptor (120) a multicast group join message to the second encryptor (170) using a multicast routing protocol;
sending (430) an encrypted message to the second encryptor (170), wherein the encrypted message comprises instructions to the second encryptor (170) to obtain (440) the first multicast data from the first server (190);
encrypting (450) the multicast data and the first server (190) routing data by the second encryptor (170);
receiving (460) encrypted the first multicast data from the second encryptor;
decrypting (470) the first multicast data by the first encryptor (120); and
receiving (480) the first multicast data at the host (110).

2. A method (400) according to claim 1, wherein the encrypted message further comprises instructions to obtain a second multicast data from a second server (195), the method further comprising:
encrypting the second multicast data and the second server (195) routing data by the second encryptor (170);
receiving encrypted the second multicast data from the second encryptor (170);
decrypting the second multicast data by the first encryptor (120); and
receiving the second multicast data at the host (110).

3. A method (400) according to claim 1, the method further comprising:
suspending forwarding encrypted the first multicast data by the second encryptor (170);
determining by the first encryptor an updated address of the second encryptor (170);
sending by the second encryptor (170) a request to obtain the first multicast data from the first server (190); and
resuming by the first encryptor (120) receiving encrypted the first multicast data.

4. An arrangement for transforming packets in an Internet Protocol communication network, comprising:
a first encryptor (120) configured to determine an address of a second encryptor (170), wherein the second encryptor (170) is routed to a first server (190) providing multicast data;
wherein the first encryptor (120) is configured to send a multicast group join message to the second encryptor (170) using a multicast routing protocol;
wherein the first encryptor (120) is configured to send an encrypted multicast group join message to the second encryptor (170) comprising instructions to the second encryptor (170) to obtain multicast data from the first server (190);
wherein the second encryptor (170) is configured to encrypt the multicast data and forward the encrypted multicast data towards the first encryptor (120); and
wherein the first encryptor (120) is configured to receive encrypted multicast data from the second encryptor (170), and to decrypt the multicast data.

5. An arrangement for transforming packets in an Internet Protocol communication network according to claim 4, comprising means to carry out the method according to any preceding claims 2-3.

6. A non-transitory, computer-readable medium storing instructions that, when executed by at least one processor of a computer, perform a method for transforming packets in an Internet Protocol communication network, comprising:
determine by a first encryptor an address of a second encryptor,
wherein the second encryptor is routed to a first server providing first multicast data, and the first encryptor is routed to a host;
send by the first encryptor a multicast group join message to the second encryptor using a multicast routing protocol;
send an encrypted message to the second encryptor, wherein the encrypted message comprises instructions to the second encryptor to obtain the first multicast data from the first server;
encrypt the multicast data and the first server routing data by the second encryptor;
receive encrypted the first multicast data from the second encryptor;
decrypt the first multicast data by the first encryptor; and receive the first multicast data at the host.

7. A non-transitory, computer-readable medium storing instructions according to claim 6 comprising instructions, when executed by at least one processor of a computer, to execute the method according to any of the preceding claims 2-3.
